# EUROPEAN PATENT APPLICATION

(11) **EP 4 656 566 A1**
(43) Date of publication of application: **03.12.2025**
(21) Application number: 25179831.0
(22) Date of filing: 30.05.2025
(51) Int. Cl.: B65G 69/00

(54) **MANUAL BLOCKING DEVICE FOR BLOCKING A VEHICLE, DOCK AND DISTRIBUTION CENTRE PROVIDED THEREWITH, AND METHOD FOR BLOCKING A VEHICLE**

(30) Priority: 30.05.2024 NL 2037817
(71) Applicant: Stertil B.V., 9288 CA Kootstertille (NL)
(72) Inventor: de Jong, Jurjen Jan, 9288 CA KOOTSTERTILLE (NL)
(74) Representative: Arnold & Siedsma

(57) **Abstract**

The present invention relates to manual blocking device for blocking a vehicle, dock and distribution centre provided therewith and method for blocking a vehicle. The manual blocking device according to the invention comprises:
- a guide track with guide track supports disposed along a driveway;
- a carriage attached to the guide track with a blocking element, with the carriage being capable of moving along the guide track, and comprising a manual carriage drive;
- a blocking element extension mechanism configured to extend the blocking element between a retracted position and a blocking position, wherein the blocking element extension mechanism comprising a manual blocking drive;
- a locking mechanism having a locking position configured for locking the carriage; and
- an automatic lock configured for maintaining the lock mechanism in its locking position,
wherein the automatic lock comprises a releaser that is configured for unlocking the automatic lock.

## Description

The present invention relates to a manual blocking device for blocking a vehicle, such as a truck at a loading-unloading station. A loading-unloading station may relate to a dock of a distribution centre, for example. Such distribution centre receives and sends loads, including packages, parcels, pallets with products, consumable materials and finished products. These distribution centres typically include at least one dock or docking station for loading/unloading the products by receiving a truck or trailer or container or swap body. Often, such dock comprises a so-called dock house including dock levellers, dock shelters and other components.

A conventional blocking device is described in EP 3390253 B1. Such blocking device comprises a carriage that is moveable over a guide track. As soon as a truck is correctly positioned relative to the loading-unloading station/dock, the carriage is moved to the desired position. Next, the blocking element of the blocking device is moved into its blocking position and blocks one of the vehicle wheels such that driving or rolling away is made impossible. Such conventional blocking device is part of an automated truck restraint system that is preferably coupled with the dock and dock components such as a door and/or a leveller. Such automated system requires coupling of all components and involves a financial investment.

From practice there are known some manually operated restraint systems that provide a relatively simple blocking device. A problem with these conventional manual systems is that often insufficient robustness is provided when dealing with trucks. Furthermore, in practice blocking elements are sometimes retracted too early leading to unsafe situations. Another problem is the incorrect use by an operator or truck driver such that system is not properly functioning, for example by positioning the blocking element on the wrong side of the wheel and/or incorrect positioning of the blocking element that may result in play/creep. This may then result in a hazardous loading/unloading operation. In addition, conventional manually operated restraint system are often malfunctioning due to weather conditions, such as freezing, raining, dirt collection et cetera.

The present invention has for its object to obviate or at least reduce one or more of the above-stated problems by providing an improved manual blocking device.

The present invention provides for this purpose a manual blocking device for blocking the vehicle, the blocking device comprising:
- a guide track with guide track supports disposed along a driveway;
- a carriage attached to the guide track with a blocking element, with the carriage being capable of moving along the guide track, and comprising a manual carriage drive;
- a blocking element extension mechanism configured to extend the blocking element between a retracted position and a blocking position, wherein the blocking element extension mechanism comprising a manual blocking drive;
- a locking mechanism having a locking position configured for locking the carriage; and
- an automatic lock configured for maintaining the lock mechanism in its locking position,
wherein the automatic lock comprises a releaser that is configured for unlocking the automatic lock.

In the context of the present invention the terminology of loading-unloading station, a dock, dock house, the docking station is used interchangeably. A dock can be provided with a dock shelter and/or dock leveller and/or other components that will be known to the skilled person.

According to the invention a guide track is disposed along a driveway of a loading-unloading station that is typically provided in combination with a distribution centre. Guide track supports connect the guide track to the driveway. A vehicle, such as a truck, can be parked in the driveway along the guide track for the purpose of loading and/or unloading the truck at the station/centre.

A carriage is provided to the manual blocking device, wherein the carriage can be moved along the guide track. A blocking element is attached to the carriage such that the blocking element can be moved to the correct position along the guide track together with the carriage. The blocking element is preferably a massive element with a rectangular or even square cross-section. Typically, the blocking element is capable of being positioned against one of the rear wheels or rear tires of the vehicle to be blocked. The blocking element is preferably shaped as a rod, bar, pen et cetera. In a blocking position, the blocking element is preferably in contact with the vehicle wheel or tire such that the blocking element of the manual blocking device blocks movement of the vehicle. This includes an unauthorized leaving of the driveway and undesired creep of the vehicle. The vehicle blocking prevents an accidental and/or unauthorised movement of the vehicle and thereby prevents unsafe situations when loading/unloading the vehicle, for example.

According to the invention a manual carriage drive is provided that is configured for manually moving the carriage along the guide track. This manual carriage drive can be operated by an operator of the dock, truck driver and/or another suitable person at relatively low cost. A further advantage of using a manual carriage drive is that the carriage can be positioned correctly relative to the vehicle for all vehicle types, including vehicle types that arrive at the driveway for the first time.

Movement of the blocking element between the blocking position and a retracted position is enabled with a blocking element extension mechanism that comprises a manual blocking drive. This manual blocking drive can be used to bring the blocking element from a retracted position into a blocking position and vice versa. This manual blocking drive can be operated by an operator of the dock, a truck driver and/or another suitable person. This manual blocking drive provides an effective means for switching the position of the blocking element at relatively low cost.

According to the invention the manual blocking device further comprises a locking mechanism having a locking position, wherein the locking mechanism is configured for locking the carriage. Preferably, the locking mechanism locks the carriage to the guide track. By locking the carriage in a specific position, any undesired movement of the carriage is prevented. This prevents unsafe situations.

Furthermore, the manual blocking device according to the present invention comprises an automatic lock that is configured for maintaining the lock mechanism in its locking position, thereby blocking the carriage and/or blocking element in their respective position(s). The automatic lock further comprises a releaser that is configured for unlocking the automatic lock and thereby enabling movement of the carriage and/or blocking element. The automatic lock with its releaser prevents unauthorised movement of the carriage and/or the blocking element by an operator or truck driver, for example.

If the blocking element of the manual blocking device according to the present invention is in a retracted position, a vehicle, such as a truck, has access to the driveway and can be parked in the driveway and/or can be removed from the driveway. Before loading/unloading the vehicle, any undesired movement of the vehicle needs to be prevented. Therefore, the carriage with blocking element of the manual blocking device according to the invention is moved and positioned correctly relative to the vehicle along the guide track. After the carriage is positioned correctly, the blocking element is brought from the retracted position into the locking position, wherein it preferably engages the vehicle wheel or tire to prevent any undesired movement of the vehicle. The locking mechanism then locks the carriage into its position and the automatic lock is used to maintain the locking mechanism in its locking position, such that the carriage and/or blocking element continue to prevent any unauthorised and/or undesired movement of the vehicle and can not be brought into a retracted position without authorization. After loading/unloading the vehicle is finished, the releaser of the automatic lock may unlock the automatic lock such that the blocking element can be retracted, and the carriage can be moved to its initial position.

In a preferred embodiment of the present invention the blocking element extension mechanism comprises a sliding mechanism that is operated by the manual drive, and wherein the sliding mechanism comprises a sliding guide that extends in a direction that is substantially perpendicular to the guide track.

Providing a sliding mechanism for the blocking element enables an easy positioning of the blocking element relative to the vehicle wheel or tire. Especially as compared to a rotational movement such sliding movement of the blocking element requires less manoeuvring space. This improves the possibilities for correctly positioning the blocking element relative to a vehicle wheel or tire for a wider range of vehicle types. Furthermore, a sliding movement of the blocking element has a lower risk of damaging the vehicle. Typically, the sliding movement is in a direction that is substantially perpendicular to the direction of movement of the carriage along the guide track. Such directions of movement of the blocking element relative to the carriage and of movement of the carriage relative to the guide track enables a correct and effective positioning of the blocking element relative to the vehicle.

In a preferred embodiment of the present invention the manual drive comprises a handle.

The manual drive of the manual blocking device is configured for moving the blocking element between a retracted position and a blocking position. Preferably, this movement of the blocking element relates to a translational movement involving a sliding mechanism. Providing a handle to the manual drive enables a user of the manual blocking device to move the blocking element into its desired position relatively easy.

Preferably, also the manual carriage drive comprises a handle to render movement of the carriage along the guide track easy. More preferably, the manual carriage drive comprises a separate handle to further provide a user-friendly operation of the manual blocking device in such embodiment according to the present invention.

In a further preferred embodiment of the present invention the locking mechanism comprises a locking handle configured for manually locking and/or unlocking the carriage and wherein the locking handle is separate from the manual drive.

The locking mechanism is capable of locking to carriage in the specific desired position against undesired movements of the carriage. A locking handle is preferably provided to enable manual locking and/unlocking of the carriage. The locking handle is provided separate from the manual drive. This increases the overall safety when working with the manual blocking device.

Furthermore, providing a separate locking handle enables releasing the blocking element, also in case the vehicle pushes against the blocking element. Preferably, this release is further improved by applying a so-called self-releasing toothed profile.

Preferably, the locking mechanism comprises a locking element that is configured for engaging the guide track for locking the carriage in its position along the guide track. Such locking element may involve a pen or shaft or other suitable element that engages on the guide track, for example on or between adjacent teethed of a toothed guide track. Such embodiment provides an effective locking which is robust and sufficiently accurate. For example, the pitch or ratched increments of the toothed guide track is about 40 mm, so that truck movement is minimised. The locking handle provides an easy tool for a user to manually lock and/or unlock the carriage, preferably locking and/or unlocking using an engagement of the carriage to the guide track.

In a presently preferred embodiment of the invention the locking mechanism comprises a fixation element that is configured for fixating the blocking element in the blocking position. Such fixation element can be a pen, shaft, rod, and in a presently preferred embodiment the fixation element is a locking plate. Such fixation element fixates the blocking element in the blocking position.

In one of the presently preferred embodiments of the invention the locking mechanism locks the carrier in its desired position and simultaneously locks the blocking element in the blocking position in the same locking movement. Such locking movement is preferably performed with the use of the aforementioned locking handle.

In a further preferred embodiment of the present invention the automatic lock comprises a movable engagement element or hook lock that is configured for directly or indirectly engaging an automatic locking element.

Such automatic locking element may relate to a (hook) pen or other suitable element such as pin, rod, recess etc. The movable engagement element or hook lock can be moved from a retracted position to a locked position, wherein the movable engagement element or hook lock engages the automatic locking element, such as the aforementioned recess or hook pen. Such engagement prevents unauthorised unlocking of the carriage and/or blocking element by releasing the locking mechanism. Releasing the automatic lock is performed with a releaser that is configured for this unlocking of the automatic lock. In one of the presently preferred embodiments this releaser involves a solenoid that directly or indirectly engages the locking mechanism, more preferably the locking handle thereof.

The automatic lock is activated when the manual blocking device is set into its blocking position such that loading/unloading of the vehicle may begin. The automatic lock is preferably activated by the manually driven movement of the locking mechanism. The automatic lock then preferably prevents retreating the locking element, or preferably the locking handle thereof, such that unauthorised unlocking by manually driving the locking mechanism is rendered impossible. In such presently preferred embodiment of the invention, the solenoid is capable of moving the lock hook to its free unlocking position such that the locking mechanism can be moved manually towards its retracted position. The release of the automatic lock can be done by a dock attendant and/or controller, for example either directly or indirectly by positioning the leveller in the home position and/or closing the door of the dock after loading/unloading the vehicle is finished.

In a further preferred embodiment of the invention the manual blocking device further comprises a locking controller.

A locking controller can steer the automatic lock, more preferably controls the solenoid thereof in one of the presently preferred embodiments. This locking controller can be activated by a dock attendant and/or can be activated automatically by positioning the leveller of the dock in a home position and/or closing the door of the dock after loading/unloading the vehicle has been finished, for example. This prevents unauthorized movement of the vehicle during loading or unloading such that a safe loading/unloading can be guaranteed.

Optionally, the locking control is operatively connected to an acoustic and/or visual signalling means, which in one of the presently preferred embodiments involves providing a traffic light. Such traffic light switches signal between red and green indicating the status of the manual blocking device, for example.

In a presently preferred embodiment of the invention the manual blocking device comprises a tire sensor. Such tire sensor is configured for detecting a wheel or tire of the vehicle and is preferably coupled to the locking controller and/or a dock controller preferably comprising such locking controller, so that the door of the dock is only opened and/or the leveller is only brought into its position of use when the manual blocking device is positioned correctly. In an unsafe situation the tire sensor may cause an alarm and/or notification and/or other relevant signal to the dock attendant, vehicle driver and/or other suitable person.

Furthermore, the manual blocking device preferably comprises a lock sensor and/or an unlock sensor. Such sensor or sensors detect the position of the blocking element and may also cause an alarm, notification and/or other suitable signal. This improves the overall safety when working with the manual blocking device when loading/unloading a vehicle at a dock.

The present invention also relates to a dock and/or such distribution centre comprising a dock with a manual blocking device in an embodiment of the present invention.

Such dock and/or distribution centre provides similar effects and advantages as described in relation to the manual blocking device.

Preferably, the dock comprises a dock controller, wherein the dock controller is configured for co-operating with a locking controller of the manual blocking device and/or wherein the dock controller is integrated with the locking controller of the manual blocking device. Such dock controller can be used to monitor the manual blocking device and/or can be used to steer the automatic lock thereof. This enables safe loading/unloading the vehicle at such dock.

The invention further also relates to a method for blocking the vehicle in a driveway, the method comprising the steps of:
- providing a manual blocking device and/or dock or distribution centre in an embodiment according to the present invention;
- positioning the carriage along the guide track near a wheel of a vehicle;
- moving the blocking element into the extended blocking position;
- locking the carriage;
- blocking a vehicle and/or entry to the driveway;
- releasing the manual blocking device; and
- authorizing the vehicle to leave the driveway.

Such method provides the same or similar effects and advantages as described in relation to the manual blocking device, dock and/or distribution centre provided therewith.

Preferably, the step of moving blocking element into the extended blocking position comprises translating the blocking element along a guide of the sliding mechanism. Such sliding movement reduces the space that is required for movement of the blocking element as compared to a rotating movement. This improves the flexibility of the manual blocking device and/or prevents damage of the vehicle as a result of movement of the blocking element. Also, this enables an effective operation in a wider range of vehicle types.

Preferably, the locking element locks the carriage and simultaneously locks the blocking element in the blocking position. In such a presently preferred embodiment, movement of the locking element locks both the carriage and the blocking element in the relevant positions. This provides a safe loading/unloading situation for the vehicle, while maintaining a user-friendly operation by a user.

Preferably, the releaser of the automatic lock unlocks the manual blocking device, more preferably by releasing the locking mechanism and enabling movement thereof from a blocking position into a retracted position, wherein the blocking element and the carriage can be moved freely.

Preferably, the releaser is remotely controlled such that a user/operator, for example a truck driver, cannot unlock the manual blocking device unauthorised. This improves the overall safety that is achieved with the manual blocking device according to the present invention.

Further advantages, features and details of the invention are elucidated on the basis of preferred embodiments thereof, wherein reference is made to the accompanying drawings, in which:
- Figure 1A shows a view of a dock of a distribution centre with a manual blocking device according to the present invention;
- Figure 1B shows the manual blocking device of figure 1A;
- Figure 2A shows a first embodiment of the manual blocking device according to the present invention with the blocking element in a retracted position;
- Figure 2B shows the manual blocking device of figure 2A with the blocking element in a blocking position;
- Figure 2C shows the manual blocking device of figures 2A-B with the blocking element in its locked blocking position;
- Figure 3A1-2 show further views of the manual blocking device of figures 2A-C;
- Figures 3B1-E show details of the locking of the manual blocking device of figures 3A1-2;
- Figure 4A shows a second embodiment of the manual blocking device according to the present invention with the blocking element in a retracted position;
- Figure 4B shows the manual blocking device of figure 4A with the blocking element in a blocking position;
- Figure 4C shows the manual blocking device of figures 4A-B when releasing the blocking element; and
- Figure 4D shows the releaser of the manual blocking device of figures 4A-C.

The following description is merely exemplary in nature and is in no way intended to limit the invention, its application, or uses. While the disclosure is described as having exemplary attributes and applications, the present disclosure can be further modified. This application is therefore intended to cover any variations, uses, or adaptations of the disclosure using its general principles. Further, this application is intended to cover such departures from the present disclosure as come within known or customary practice of those skilled in the art to which this disclosure pertains and which fall within the limits of the appended claims. Accordingly, the following description of certain embodiments and examples should be considered merely exemplary and not in any way limiting.

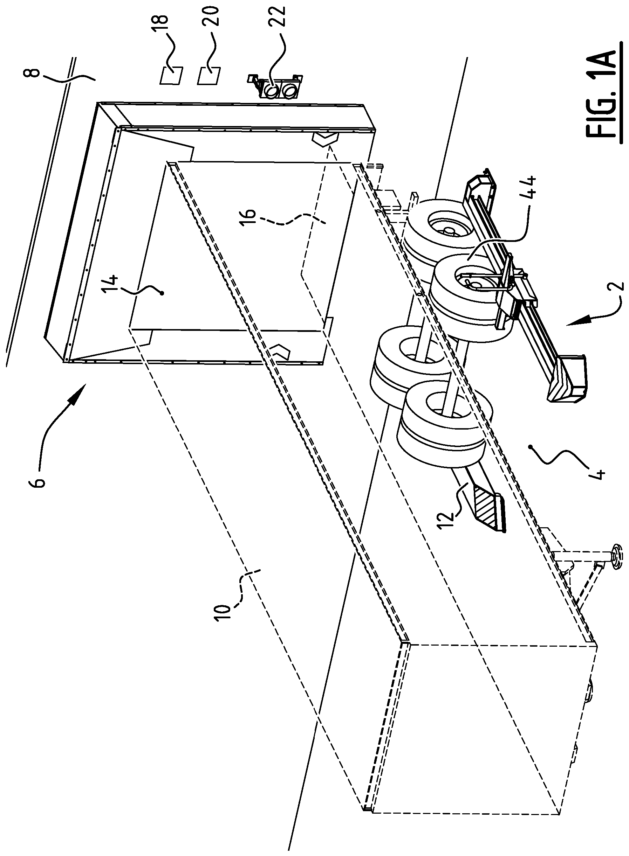

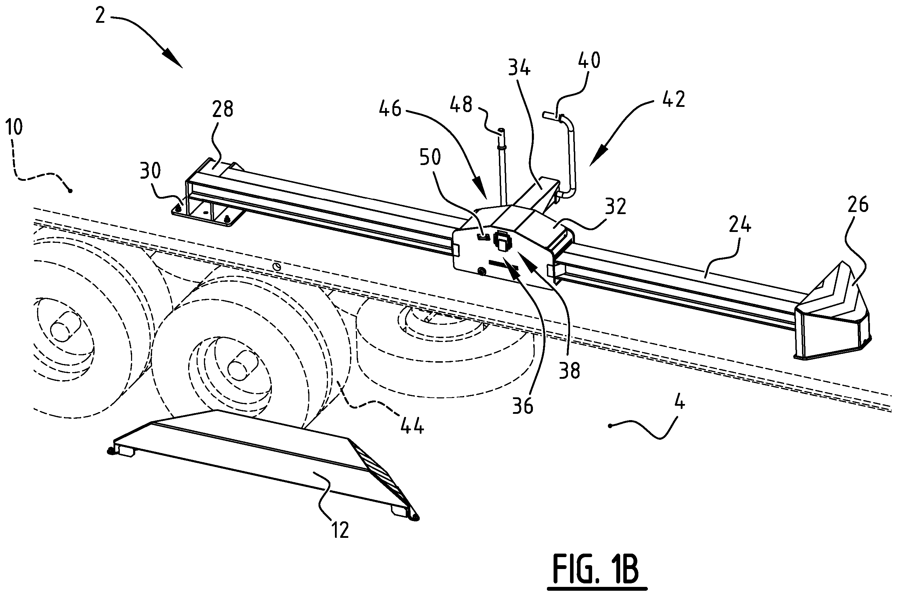

Manual blocking device 2 (figures 1A-B) is mounted along driveway 4 in front of dock 6 of distribution centre 8. In the illustrated embodiment, vehicle 10, or more precisely a trailer, is positioned in front of dock 6 in driveway 4. Driveway 4 is further provided with stationary guide 12. Dock 6 comprises door 14 and is further provided with schematically illustrated dock leveller 16. Furthermore, there is provided dock controller 18, locking controller 20 and traffic light 22.

Manual blocking device 2 comprises guide track 24 with front end guide support 26 and dock end guide support 28 having foot 30 enabling mounting to ground/driveway 4. Carriage 32 can be moved along guide track 24 and comprises blocking element 34. In the illustrated embodiment blocking element 34 can be moved in a direction that is substantially perpendicular to (the length of) guide track 24 using sliding mechanism 36 with sliding guide 38, preferably with the use of blocking handle 40. Blocking handle 40 of blocking element extension mechanism 42 enables movement of blocking element 34 from its retracted position to the blocking position and vice versa. In the blocking position, blocking element 34 engages against tire/wheel 44 of vehicle 10. Locking mechanism 46 comprises locking handle 48 and locks carriage 32 in its position. Preferably, locking mechanism 46 not only locks carriage 32 in its desired position, it also locks blocking element 34 in its blocking position. In the illustrated embodiment tire sensor 50 is provided to manual blocking device 2.

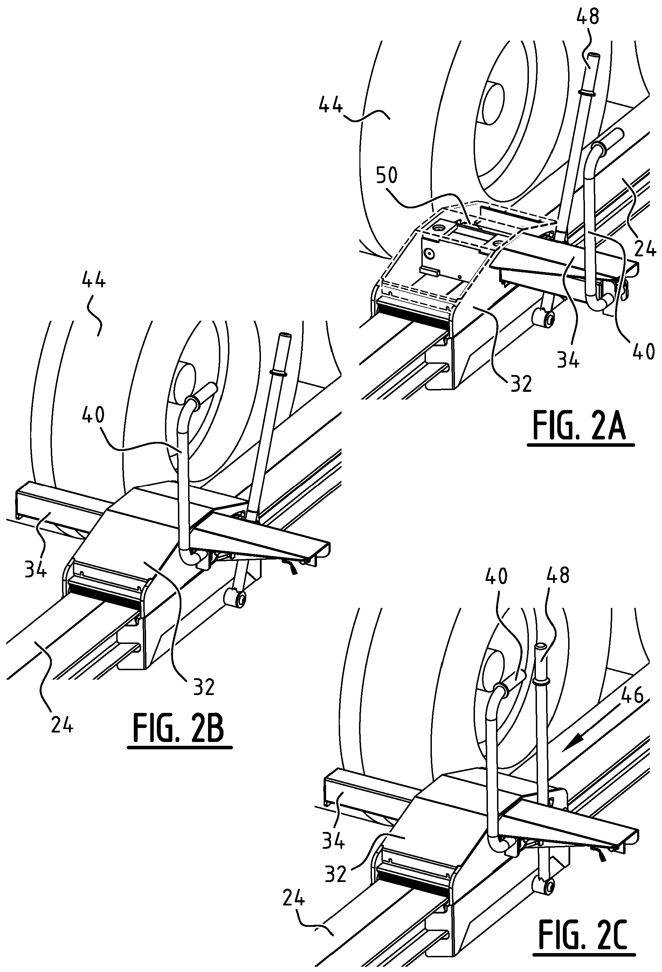

To blocking vehicle wheel 44 (figures 2A-C) carriage 32 is positioned along guide track 24. In the illustrated embodiment, carriage 32 is brought into the desired position (figure 2A) with blocking element 34 in the retracted position. Then, blocking element 34 is moved from its retracted position into its blocking position (figure 2B) with the use of handle 40, such that blocking element 34 preferably restricts any form of movement of vehicle wheel 44. In this blocking position, locking mechanism 46 can be activated (figure 2C) using handle 48. In the illustrated embodiment, carriage 32 is preferably locked to guide track 24 and simultaneously blocking element 34 is locked in its blocking position.

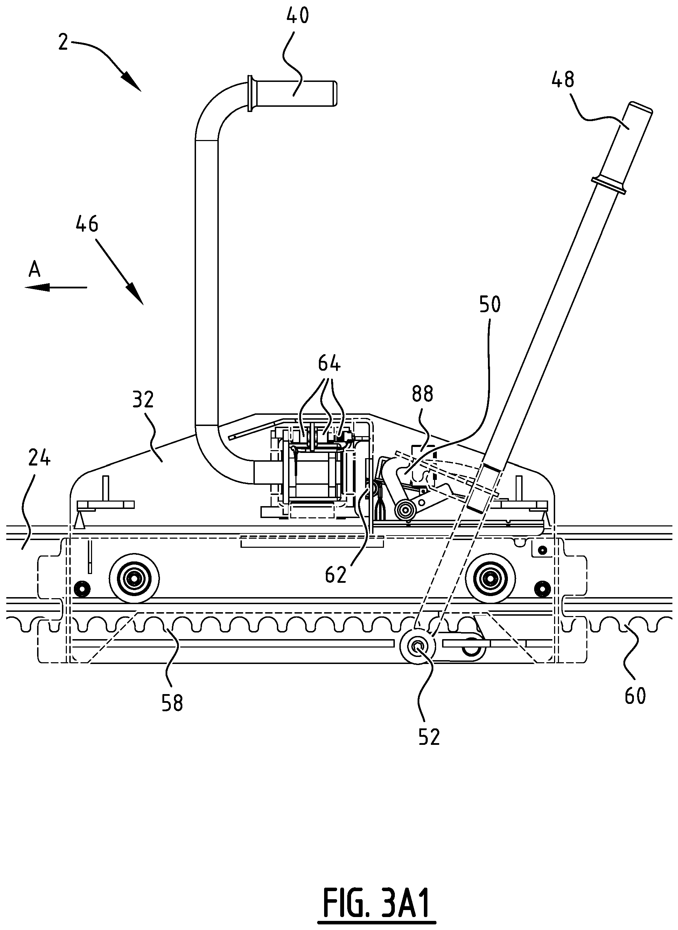

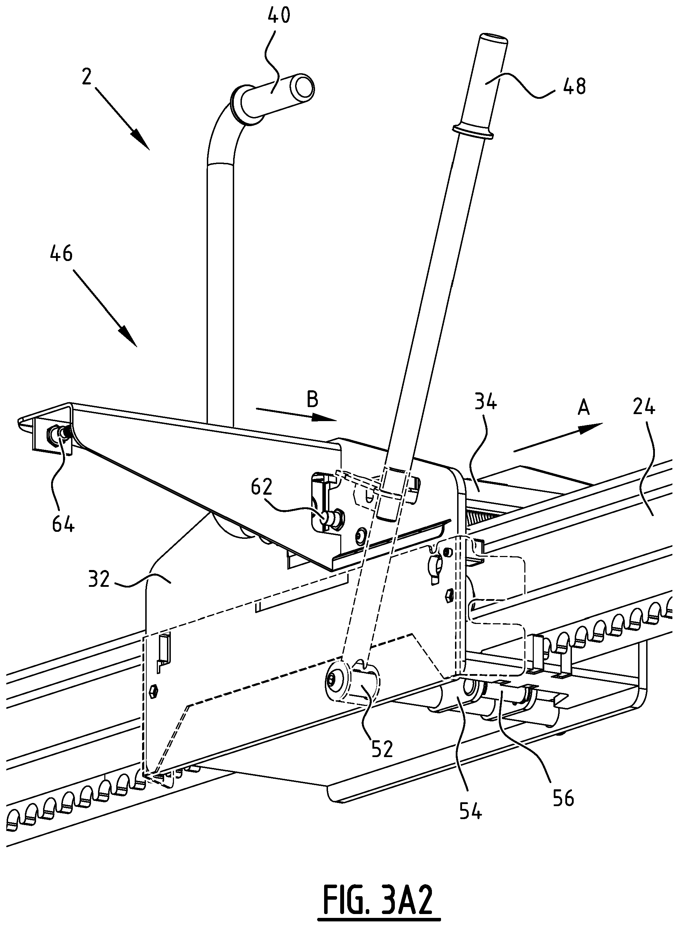

Locking mechanism 46 (figure 3A1-2) comprises locking handle 48 that is capable of rotating around shaft 52. Shaft 52 is connected to arm 54 that at its other end is provided with locking pen 56. Locking pen 56 moves when moving locking handle 48 and engages (between) teeth 58 that are provided to toothed rail 60 of guide track 24.

In addition to tire sensor 50, also lock sensor 62 and one or more unlock sensors 64 can be provided that are preferably operatively connected to locking controller 20 and/or dock controller 18. Optionally, controllers 18, 20 can provide signals such as by steering traffic light 22. Optionally, controllers 18, 20 can be integrated into a single controller. It will be understood that other sensors, controllers and signalling devices can also be envisaged in accordance with the present invention.

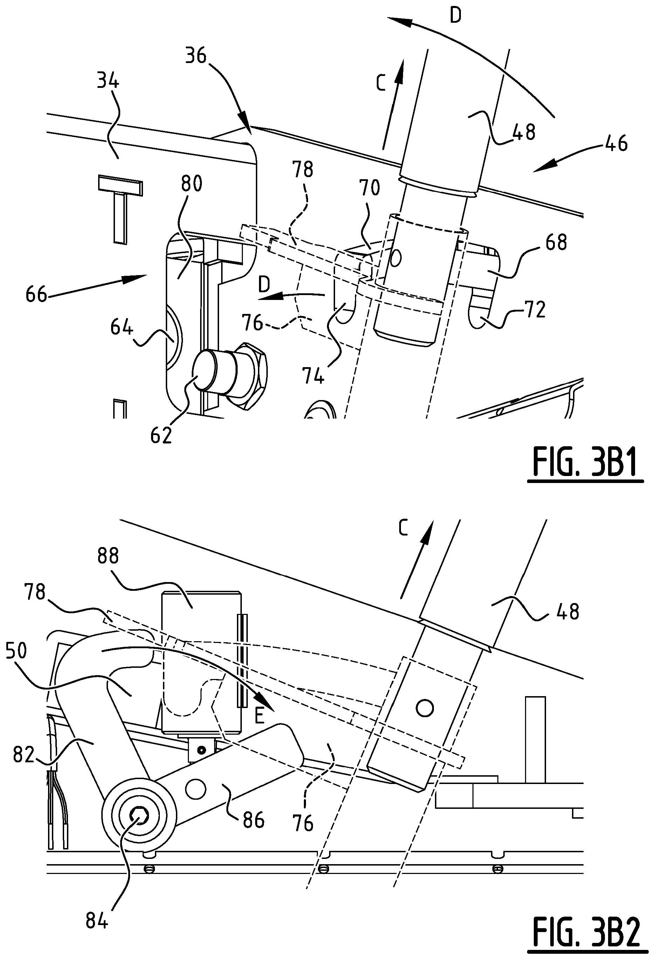

Automatic lock 66 (figures 3B1, 3B2, 3C, 3D and 3E) involves pen 68 that can move in groove 70 between free groove end 72 and locked groove end 74. In the illustrated embodiment, pen 68 is operatively connected to locking handle 48 together with locking plate 76 and fixation lock 78. Blocking element 34 is provided with blocking opening 80. Automatic lock 66 further comprises hook lock 82 that is capable of rotating around hook shaft 84. In this embodiment, movement of hook lock 82 triggers movement of hook arm 86.

When vehicle 10 is parked in driveway 4, manual blocking device 2 will be activated and operated. Carrier 32 is moved in direction A along guide track 24 (figure 3A1), optionally by pushing and/or pulling blocking handle 40 in direction A. When carrier 32 is moved to its desired position along guide track 24 relative to vehicle 10, blocking element 34 is moved in direction B, that is substantially perpendicular to direction A, by moving blocking handle 40 in direction B (figure 3A2).

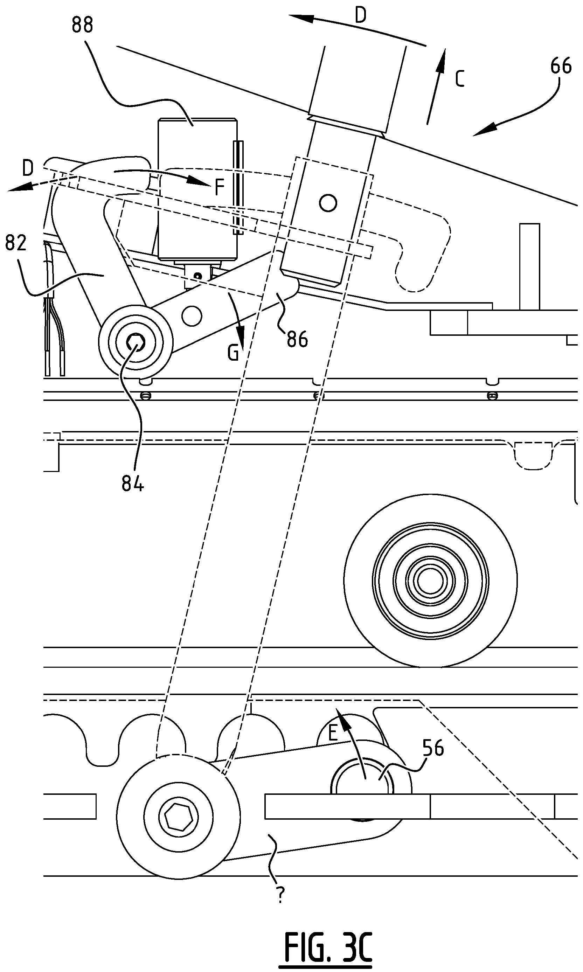

After bringing blocking element 34 into its blocking position, locking mechanism 46 is activated (figure 3B1 and figure 3B2). In this embodiment, this involves pushing and/or pulling locking handle 48 in lengthwise direction C, thereby lifting pen 68 out of groove end 72. Then, locking handle 48 can be rotated in direction D such that pen 68 moves in groove 70 towards lock groove end 74, while rotating around shaft 52. Movement of locking handle 48 around shaft 52 moves arm 54 with locking pen 56 into engagement with toothed rail 60 of guide track 24. In the illustrated embodiment, movement of locking handle 48 preferably also moves locking plate 76 and fixation lock 78 in direction D towards opening 80 and blocking element 34. Also, movement of locking handle 48 moves locking pen 56 in direction E (figure 3C), thereby preferably engaging toothed rail 60 of guide track 24.

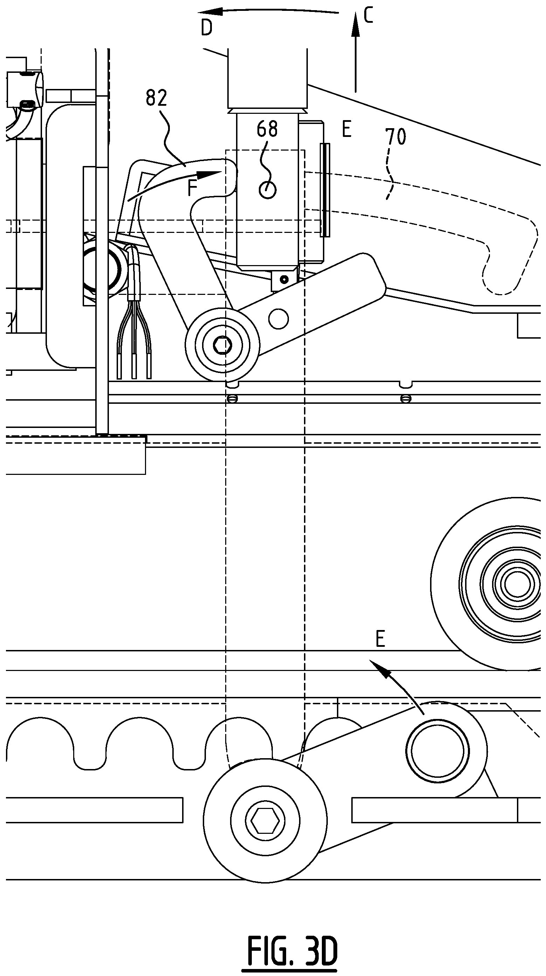

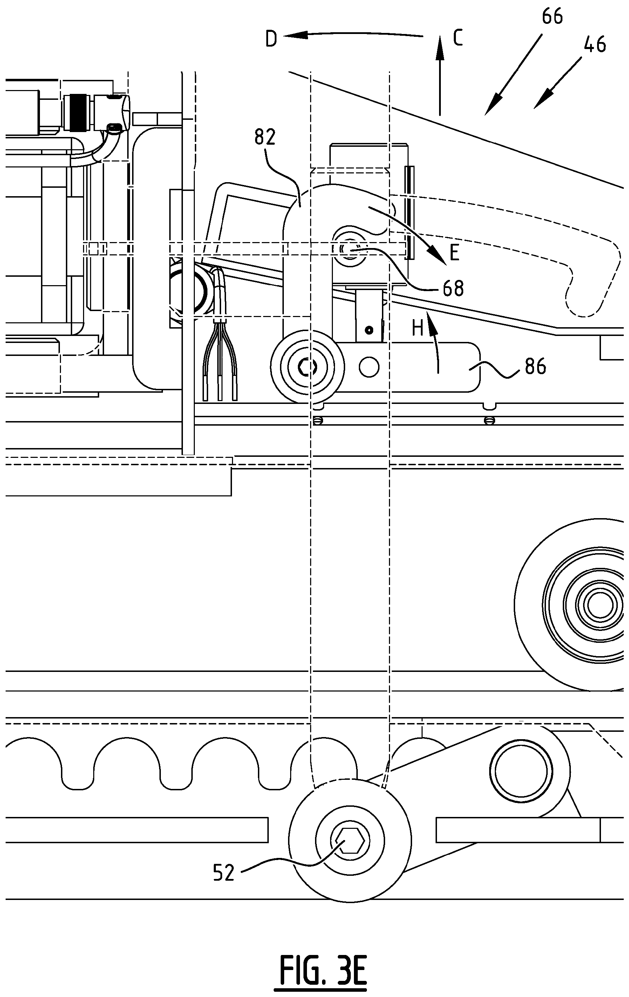

Automatic lock 66 further comprises solenoid 88 that is responsible for rotation of hook lock 82 in direction F around hook shaft 84, thereby moving hook arm 86 in direction G (figure 3C). Movement of hook lock 82 starts when pen 68 arrives at the end of groove 70 (figure 3D), whereafter pen 68 moves into the lock groove end 74 (figure 3E), thereby enabling movement of hook lock 82 in direction E engaging hook pen 68 such that hook pen 68 is locked in locked groove end 74. In this illustrated embodiment, automatic lock 66 locks locking mechanism 46 such that unauthorised unlocking is rendered impossible. Preferably, solenoid 88 is controlled by one or more of the controllers 18, 20. The release of automatic lock 66 can be done by a dock attendant and/or controller, for example either directly or indirectly by positioning the leveller in the home position and/or closing the door of the dock after loading/unloading the vehicle is finished.

When vehicle 10 is loaded/unloaded and is allowed to drive away from driveway 4 solenoid 88 is activated by an operator directly or controlled by dock controller 18 or locking controller 20 either directly or indirectly. Optionally, solenoid 88 is controlled in response to movement of leveller 16 and/or door 14 and/or any other suitable means. In response to a respective control signal solenoid 88 moves arm 86 in direction H (figure 3E) such that hook lock 82 stops the engagement with hook pen 68 thereby enabling movement of locking handle 48 in direction C, thereby lifting hook pen 68 from locked groove end 74. Then, locking handle 48 may return to its free position, thereby unlocking blocking element 34. Blocking element 34 can then be retracted to its retracted position and carrier 32 may move freely over guide track 24 and can be returned to its original position. It will be understood that other configurations for the different mechanisms and elements can be envisaged in accordance with the present invention.

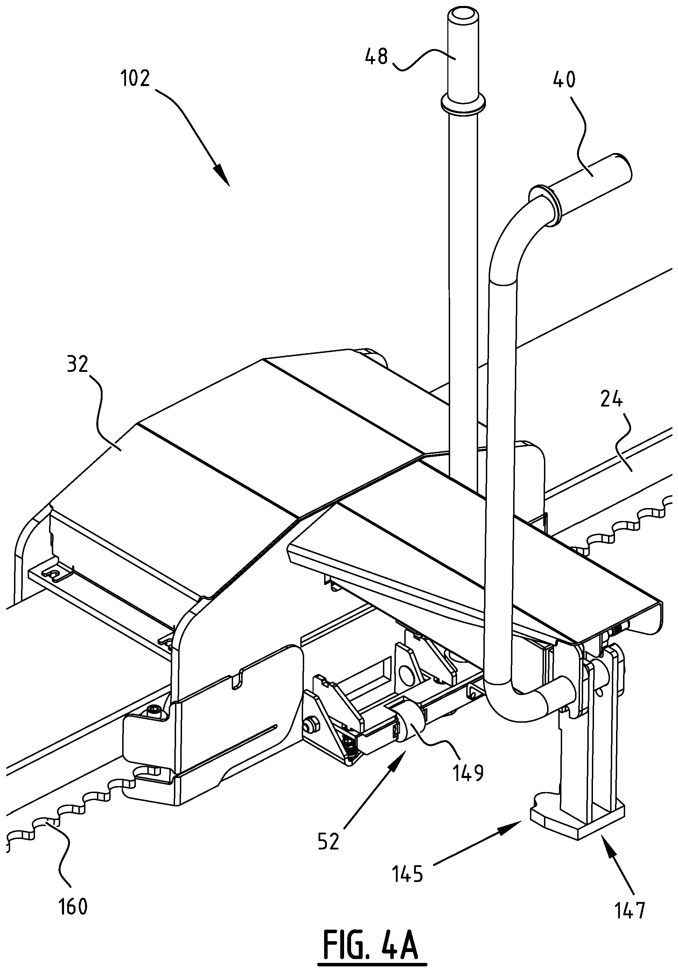

In an alternative embodiment manual blocking device 102 (figures 4A-D) can also be mounted along driveway 4 in front of dock 6 of distribution centre 8. Next, differences with the other embodiment will be discussed in more detail.

Manual blocking device 102 is provided with toothed rail 160 of guide track 24, wherein teeth of rail 160 extend sideways in a substantial horizontal direction. In the illustrated embodiment rail 60 is preferably integrated with guide track 24 such that it is not necessary to weld these parts together.

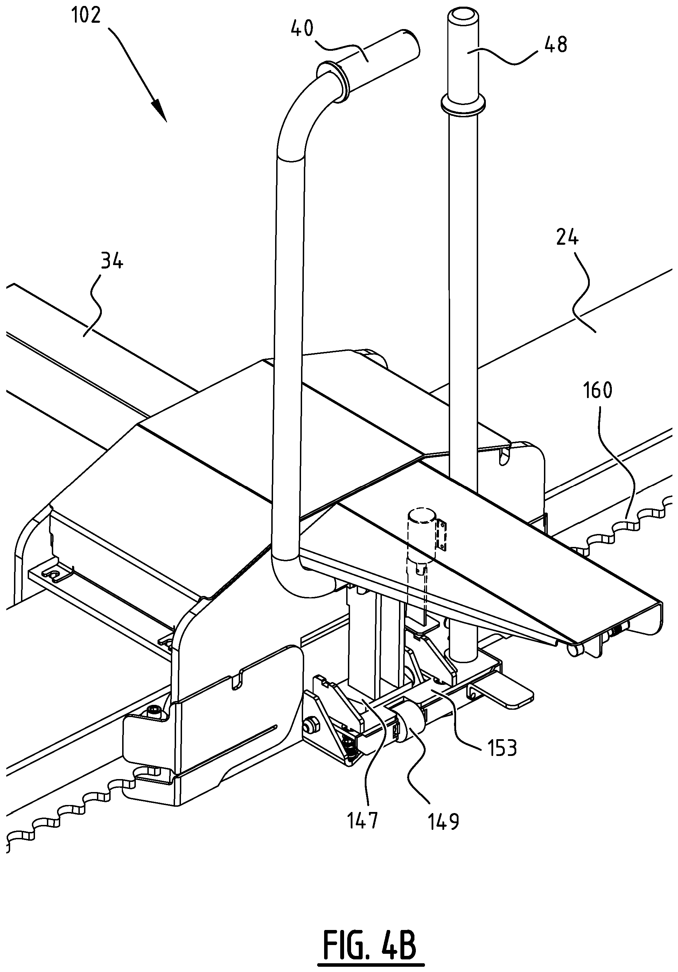

Locking is achieved by sliding blocking element 34, with guidance of roller 149, into position such that teeth 145 of lock element 147 engage toothed rail 160. This enables positioning blocking element 34 and locking its position in a single sliding movement with handle 40. This obviates the need for a separate movement with handle 48 (as compared to the embodiment illustrated in figures 3B1-2, for example). In the locked position (figure 4B) lock element 147 is locked against plate 153 that is kept into position with a spring force provided by spring element(s) 151. This prevents unauthorized disengaging teeth 145 from rail 160.

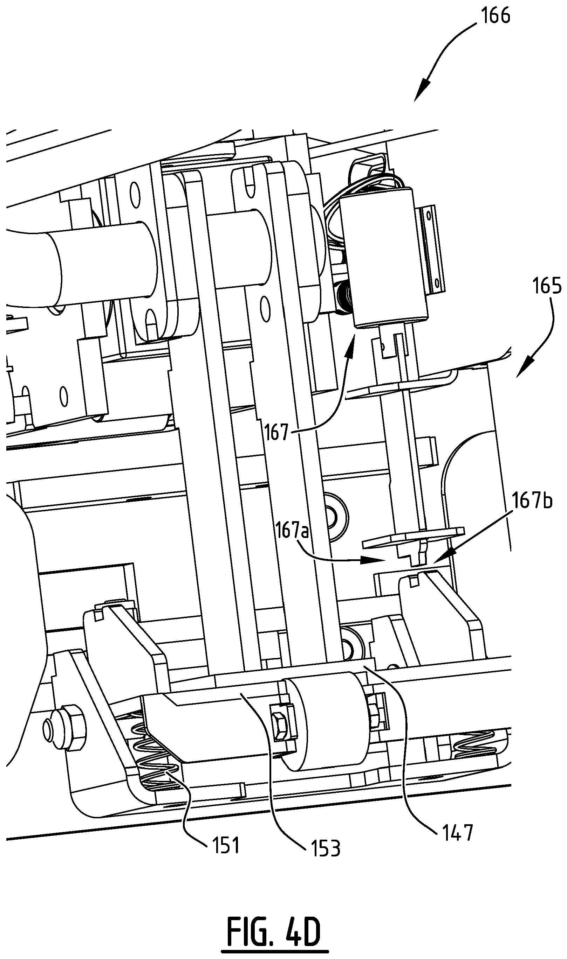

Automatic lock 166 (figure 4D) for maintaining locking mechanism 146 in its locking position comprises releaser 165 with electromagnet/solenoid 167 that is capable of moving engagement element 167a, such as a pen or strip, into engagement with locking recess 167b when locking mechanism 146 is in its locking position (figure 4B). In this illustrated embodiment, automatic lock 166 locks locking mechanism 146 such that unauthorised unlocking is rendered impossible (figure 4B).

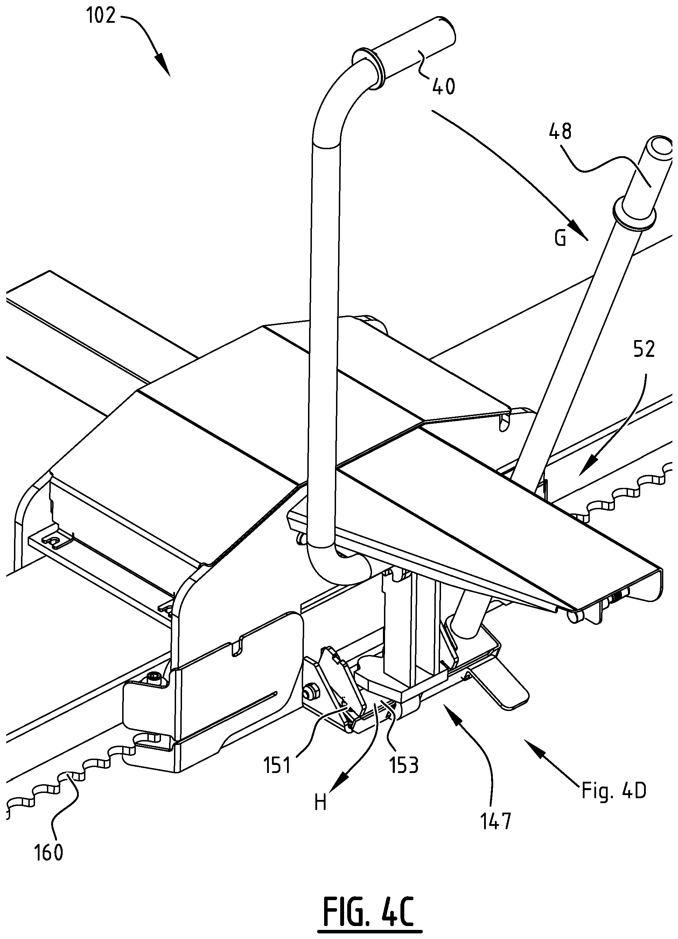

When vehicle 10 is loaded/unloaded and is allowed to drive away from driveway 4, releaser 165 is activated by an operator directly or controlled by dock controller 18 or locking controller 20 either directly or indirectly. Optionally, releaser 165 is controlled in response to movement of leveller 16 and/or door 14 and/or any other suitable means. In response to a respective control signal, electromagnet/solenoid 167 moves element 167a out of recess 167b thereby enabling movement of locking handle 48 (in direction G) and plate 153 against a spring force of spring element(s) 151 in direction H (figure 4C). Then, blocking element 34 can be retracted to its retracted position and carrier 32 may move freely over guide track 24 and can be returned to its original position. It will be understood that other configurations for the different mechanisms and elements can be envisaged in accordance with the present invention.

The present invention is by no means limited to the above-described preferred embodiments thereof. The rights sought are defined by the following claims within the scope of which many modifications can be envisaged.

## Claims

1. Manual blocking device (2,102) for blocking a vehicle (10), the device comprising:
- a guide track (42) with guide track supports (26,28) disposed along a driveway;
- a carriage (32) attached to the guide track with a blocking element (34), with the carriage being capable of moving along the guide track, and comprising a manual carriage drive;
- a blocking element extension mechanism (42) configured to extend the blocking element between a retracted position and a blocking position, wherein the blocking element extension mechanism comprising a manual blocking drive;
- a locking mechanism (46,146) having a locking position configured for locking the carriage; and
- an automatic lock (66,166) configured for maintaining the lock mechanism in its locking position,
wherein the automatic lock comprises a releaser (165) that is configured for unlocking the automatic lock.

2. Manual blocking device according to the foregoing claim, wherein the blocking element extension mechanism comprises a sliding mechanism (36) that is operated by the manual blocking drive, and wherein the sliding mechanism comprises a sliding guide (38) that extends in a direction that is substantially perpendicular to the guide track.

3. Manual blocking device according to any of the foregoing claims, wherein the manual drive comprises a handle (40).

4. Manual blocking device according to any of the foregoing claims, wherein the locking mechanism comprises a locking handle (48) configured for manually locking and/or unlocking the carriage and that is separate from the manual drive.

5. Manual blocking device according to any of the foregoing claims, wherein the locking mechanism comprises a locking element (56,47) configured for engaging on the guide track for locking the carriage to its position along the guide track.

6. Manual blocking device according to any of the foregoing claims, wherein the locking mechanism comprises a fixation element configured for fixating the blocking element in the blocking position.

7. Manual blocking device according to any of the foregoing claims, wherein the automatic lock comprises a moveable engagement element (167a) or hook lock (82) that is configured for directly or indirectly engaging an automatic locking element (167b, 68).

8. Manual blocking device according to any of the foregoing claims, wherein the releaser comprises a solenoid (88,167) that is configured for being controlled remotely.

9. Manual blocking device according to any of the foregoing claims, further comprising a locking controller (20) and/or further comprising a tire sensor (50).

10. Manual blocking device according to any of the foregoing claims, further comprising a lock sensor (62) and/or an unlock sensor (64).

11. Dock of a distribution centre, comprising a manual blocking device according to one or more of the foregoing claims.

12. Dock according to the foregoing claim, further comprising a dock controller, wherein the dock controller is configured for co-operating with a locking controller of the manual blocking device and/or wherein the dock controller is integrated with the locking controller of the manual blocking device.

13. Distribution centre comprising one or more docks and/or manual blocking devices according to one or more of the foregoing claims.

14. Method for blocking a vehicle in a driveway, the method comprising the steps of:
- providing a manual blocking device and/or dock and/or distribution centre according to one or more of the foregoing claims;
- positioning the carriage along the guide track near a wheel of a vehicle;
- moving the blocking element into the extended blocking position;
- locking the carriage;
- blocking a vehicle and/or entry to the driveway;
- releasing the manual blocking device; and
- authorizing the vehicle to leave the driveway.

15. Method according to the foregoing claim, wherein the step of extending the blocking element into the extended blocking position comprises translating the blocking element along a guide of a sliding mechanism and/or
wherein the step of locking the carriage with the locking mechanism is performed, while simultaneously locking the blocking element in the blocking position and/or
wherein the step of releasing the manual blocking device comprises activating the releaser that is configured for unlocking the manual blocking device, wherein activating the releaser preferably comprises remotely controlling the releaser.
